# EUROPEAN PATENT SPECIFICATION

(11) **EP 2 695 344 B1**
(45) Date of publication and mention of the grant of the patent: **10.06.2015**
(21) Application number: 12722475.6
(22) Date of filing: 04.04.2012
(51) Int. Cl.: H04L 27/00, H04W 16/14, H04W 74/08

(54) **SOURCE DETECTION BY SPECTRUM SENSING**
QUELLENERKENNUNG DURCH SPEKTRUMSERFASSUNG
DÉTECTION DE SOURCE PAR DÉTECTION DU SPECTRE

(30) Priority: 08.04.2011 GB 201105992
(43) Date of publication of application: 12.02.2014
(73) Proprietor: The University of Surrey, Guildford Surrey GU2 7XH (GB)
(72) Inventor: CHERAGHI, Parisa, Guildford Surrey GU2 7XH (GB); MA, Yi, Guildford Surrey GU2 7XH (GB); TAFAZOLLI, Rahim, Sutton Surrey SM2 6JT (GB)
(74) Representative: Wilson, Alan Stuart
(86) International application number: PCT/GB2012/050764
(87) International publication number: WO 2012/137004

(56) References cited:
- SOAMSIRI CHANTARASKUL ET AL: "Experimental Study of Multi-Resolution Spectrum Opportunity Detection Using Wavelet Analysis", NEW FRONTIERS IN DYNAMIC SPECTRUM, 2010 IEEE SYMPOSIUM ON, IEEE, PISCATAWAY, NJ, USA, 6 April 2010 (2010-04-06), pages 1-6, XP031664894, ISBN: 978-1-4244-5189-0
- LEHTOMAKI J J ET AL: "Analysis of the LAD Methods", IEEE SIGNAL PROCESSING LETTERS, IEEE SERVICE CENTER, PISCATAWAY, NJ, US, vol. 15, 1 January 2008 (2008-01-01), pages 237-240, XP011203529, ISSN: 1070-9908
- VARTIAINEN J ET AL: "Limits of detection for the consecutive mean excision algorithms", COGNITIVE RADIO ORIENTED WIRELESS NETWORKS&COMMUNICATIONS (CROWNCOM), 2010 PROCEEDINGS OF THE FIFTH INTERNATIONAL CONFERENCE ON, IEEE, PISCATAWAY, NJ, USA, 9 June 2010 (2010-06-09), pages 1-5, XP031757358, ISBN: 978-1-4244-5885-1
- FAHEEM SHEIKH ET AL: "Cognitive Spectrum Sensing and Detection Using Polyphase DFT Filter Banks", CONSUMER COMMUNICATIONS AND NETWORKING CONFERENCE, 2008. CCNC 2008. 5TH IEEE, IEEE CCP, PISCATAWAY, NJ, USA, 1 January 2008 (2008-01-01), pages 973-977, XP031212033, ISBN: 978-1-4244-1456-7

## Description

### Field of the Invention

The present invention relates to wireless communication systems, and in particular to the use of spectrum sensing techniques in the detection of the presence of wireless communication signals. It has particular application in orthogonal frequency division multiplex (OFDM) systems, but can also be used in other frequency division multiplexing systems such as multicarrier code division multiple access (CDMA).

### Background to the Invention

Signal detection theory provides an accurate language and representation for analysing decision making in the presence of uncertainty. Thus source detection can be thought of as processing information bearing signals in order to make inference about the information that they contain. The uncertainty in the case of wireless communication systems is caused by noise, fading and interference. The processing of the signals may be used to detect the presence of a particular type of signal with a particular protocol. However in cognitive radio systems, the presence of many different signals needs to be monitored. Cognitive radio refers to wireless architecture in which a system does not operate in a fixed frequency band, but rather monitors the available spectrum and utilizes a suitable frequency band in which to operate. Source detection for cognitive radio applications is responsible for obtaining information about existence of a user or transmission in a certain frequency band within a geographical area autonomously. Therefore, signal detection is the key technology enabling this concept.

State-of-the-art spectrum sensing approaches such as energy detection, cyclostationarity detection, matched filtering, multi-antenna eigenvalue-decomposition, and wavelet analysis can meet the US Federal communications commission (FCC) requirement under some special conditions. For example the energy detection approach meets the FCC's requirement for the case of sufficiently small noise uncertainty; the cyclostationarity detection approach offers excellent performance with the pay of large latency; the matched filtering approach requires good knowledge of air-interface and reasonable synchronization; the eigenvalue decomposition approach can exploit the antenna diversity gain, but only support a cognitive device equipped with multiple antennas; the wavelet based approach is suitable for the spectrum edge detection. An interesting problem is that almost all existing approaches cannot meet FCC's requirement in the very low Signal to Noise Ratio (SNR) range.

OFDM is one of the most widely used multi-carrier modulation techniques in wired and wireless systems, such as IEEE 802.11a/g/n, ADSL, 3GPP LTE, etc., since many of the problems arising from high bit-rate communications (i.e. time dispersion) can be overcame by employing OFDM modulation.

Soamsiri Chantaraskul et al: "Expermental Study of Multi-Resolution Spectrum Opportunity Detection Using Wavelet Analysis", New Frontiers in Dynamic Spectrum, 2010 IEEE Symposium On, IEEE, Piscataway, NJ, USA, 6 April 2010 (2010-04-06), pages 1-6 discloses a method of spectrum opportunity detection using edge detection between subbands based on wavelet analysis.

The present invention provides a source detection system for detecting presence of wireless communication signals, the system comprising: receiving means for receiving a signal; and processing means arranged to filter the signal to separate it into a plurality of frequency components, and determine an energy content for each of the frequency components, wherein in that the processing means is further arranged to select a pair of the frequency components as adjacent to each other in order of energy, calculate a measure of the difference between the energy contents of said pair of frequency components, and make a determination, from said measure, whether the signal has been transmitted from a source.

The processing means may be arranged to calculate the measure by calculating the difference between the energy content of the pair of frequency components.

The processing means may be arranged to identify a plurality of pairs of frequency components and for each pair to calculate the difference between the energy contents of the two frequency components in the pair, thereby to produce a set of energy differences.

The processing means may be arranged to order the frequency components in order of energy content, or in some other predetermined order, so as to identify the, or each, pair.

The processing means may be arranged to identify a maximum energy difference. The processing means may be arranged to identify a minimum energy difference. The processing means may be arranged to calculate the ratio (a max/min ratio) between the maximum and minimum energy differences. The processing means may be arranged to make the determination on the basis of any one or more of the maximum value, the minimum value, and the ratio.

The processing means may be arranged to allocate the signal to different categories, one of which may be, for example, a category of flat signals or a category of frequency selective signals, on the basis of the max/min ratio, and to select one of at least two further processing methods depending on whether or not the max/min ratio is greater than the reference value.

The processing means may be arranged, for signals in one of the categories, to compare the maximum energy difference with a threshold value to make the determination. The processing means may be arranged, for signals in one of the categories, to compare the maximum/minimum ratio with a threshold value to make the determination.

The processing means may be arranged to measure a signal to noise ratio for at least a component of the signal. It may be arranged compare the signal to noise ratio with a reference value. It may be arranged to select one of at least two further processing methods depending on the value of the SNR, for example on whether or not the measured signal to noise ratio is greater than the reference value.

The processing means may be arranged to split the received signal into a sequence of time windows, and to identify said frequency components for each time window.

The processing means may be arranged to identify a series of symbols in the received signal, or to have access to data defining the length of symbols potentially present in the received signal. The length of the time windows may be arranged to have a fixed relationship to the length of the symbols.

The processing means may be arranged to receive signals coding data according to a plurality of different protocols, the different protocols having symbols of different lengths, or to have access to data defining the different lengths of symbols potentially present in the received signal, and to select the length of the time windows depending on the type of signal to be detected.

The processing means may be arranged to select the length of the time windows from a look-up table relating time window length to communication protocol.

The present invention further provides a method of source detection for detecting presence of wireless communication signals, the method comprising: receiving a signal and filtering the signal to separate it into a plurality of frequency components determining an energy content for each of the frequency components; selecting a pair of the frequency components as adjacent to each other in order of energy content; calculating a measure of the difference between the energy contents of said pair of frequency components; and making a determination, from said measure, whether the signal has been transmitted from a source.

Some embodiments of the invention can provide a novel differential energy detection scheme for robust sensing of orthogonal frequency-division multiplexing (OFDM) sources or code division multiple access (CDMA) sources in very low signal-to-noise ratio (SNR) range. The underlying initiative of some of these embodiments is exploiting extreme statistics of the differential energy spectral density (ESD) in the frequency domain. In some cases this can result in techniques which are able to meet the FCC requirements in even very low SNR range.

Some embodiments of the invention have the potential to provide key techniques for the next generation of mobile networks such as 3GPP LTE and LTE-A and ITU-IMT advanced. Moreover, some embodiments have the potential to have a key role in enabling robust and efficient cognitive radios and systems including satellite, terrestrial or broadcast and military systems.

Preferred embodiments of the invention will now be described, by way of example only, with reference to the accompanying drawings in which:
**Figure 1** is a schematic view of a communications device according to an embodiment of the invention;
**Figure 2** is a flow chart showing the processing method used in the device of Figure 1;
**Figure 3** is a graph showing energy content in a range of frequency bands as measured in the device of Figure 1;
**Figure 4** is a graph showing re-ordering of the frequency bands of Figure 3 on the basis of energy content; and
**Figure 5** is a graph showing differential values of the energy content of the frequency bands of Figure 4.
**Figure 6** is a flow chart showing the processing method used in a further embodiment of the invention;
**Figure 7** is a graph showing a further embodiment of the invention where only a middle portion of the energy bands are used.

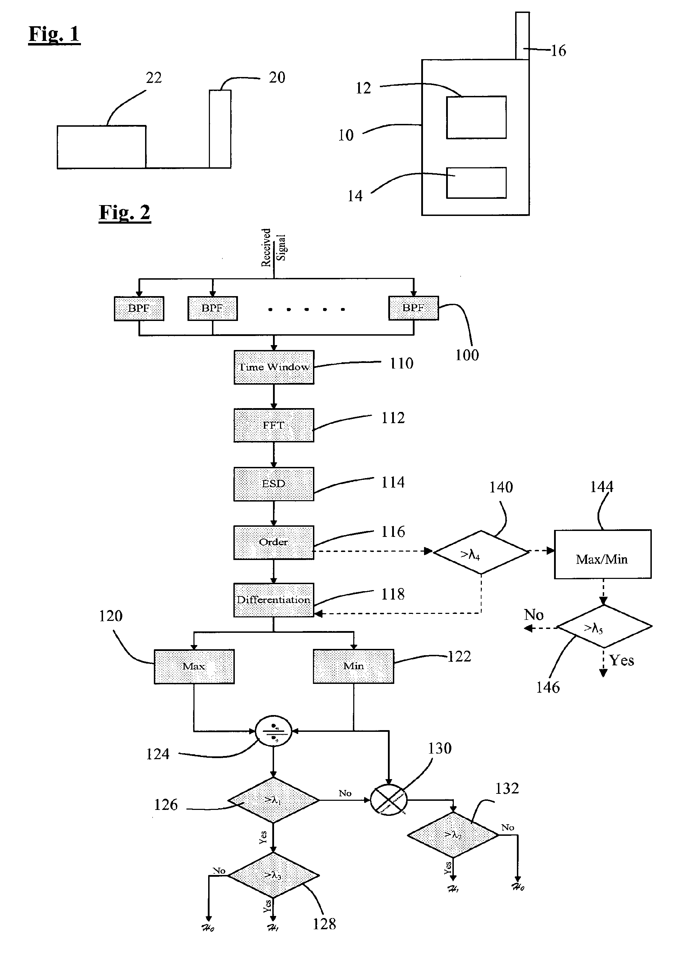

Referring to Figure 1 a mobile telecommunications device 10 comprises a processor 12 and memory 14, a transceiver unit 16 and an aerial 18. The mobile device 10 is arranged to communicate with a network comprising a number of nodes 20 and a central hub 22. The whole telecommunications system is arranged to operate using OFDM signals, in which data is transmitted in a series of symbols each having a fixed length, and each having a number of frequency sub-bands, any number of which can carry data. The frequency band within which the sub-bands of the symbol are distributed generally depends on the protocol that is being used. If the device 10 is to be able to detect signals transmitted using a range of different protocols, as required in a cognitive radio system, then it needs to be able to detect signals in a broad frequency spectrum. The extent of that range will depend on the number of possible signal types that the device needs to be able to detect.

The spectrum sensing process which the processor 12 performs on signals received via the aerial 16 comprises the following five general steps: *i*) estimating the energy spectral density (ESD), i.e. the energy within each frequency sub-band, across the total frequency bandwidth (*BW*) over which the system operates; *ii*) ordering the frequency sub-bands on the basis of detected energy; *iii*) performing differentiation with respect to the frequency, *iv*) applying extreme statistics; and *v*) a decision stage.

Referring to Figure 2 the processing of the received signal by the processor 12 will now be described in detail. First the signal is input to a series of band pass filters 100, each of which is arranged to pass only the components of the signal within a particular frequency band. These filters can be selected in different ways, but in this embodiment each filter 100 is arranged to pass a frequency band associated with a respective communication type. These can be different communication protocols, or communications from different service providers. The system can therefore select the outputs from one or more of the filters 100 for further processing depending on which types of communication the system is to detect. The further processing steps will be described in relation to the output from only one of the filters 100, but the outputs from the other filters can be processed in the same way either simultaneously, or subsequently.

The output from the band pass filter 100 is divided into time windows at step 110, and for each time window the signal is stored in a buffer, forming part of the memory 14, as a block of data comprising a series of sample values in the time domain. These values therefore record the variation in amplitude of the signal over the period of the time window. The length of the time window, and hence the size of the data blocks, needs to be chosen cautiously since large data blocks will result in larger buffer size thus making the hardware bigger and more expensive. Also the larger the blocks are the more delay is introduced in the system. The speeds at which DSP processors operate are also determined by the size of the data blocks.

The following method of processing will be described for the stored signal for a single time window data block, but it will be appreciated that this process is repeated for each time window of the received signal.

At step 112 the processor is arranged to separate the signal into a series of frequency components each one representing the content of the signal within a respective frequency sub-band within the range of the band pass filter 100. This conversion to the frequency domain can be performed using one of many methods such as Discrete or Fast Fourier Transforms, or Hartley, Cosine or Walsh functions. In this embodiment Fast Fourier Transform (FFT) is used.

After calculating the magnitudes of the frequency components of the time domain sample data blocks, the energy spectral density (ESD) is determined at step 114 by squaring the absolute value each FFT frequency component. Employment of ESD operation makes the method robust to the possible time offset which can be encountered in any communication system. ESD approximation is based on measurement of the magnitude of the signal as a function of frequency in the frequency domain. Time offset, which is inevitable in communications systems, introduces phase distortion, but this does not affect the ESD calculation. Furthermore, frequency offset will generally shift the received signal in the frequency domain, and in the case of an OFDM signal this will cause energy leakage between adjacent carriers. However, in low SNR environments energy leakage does not have significant affect, since the dominating distortions result from noise. Therefore in low SNR environments the technique is robust to both frequency and time offsets.

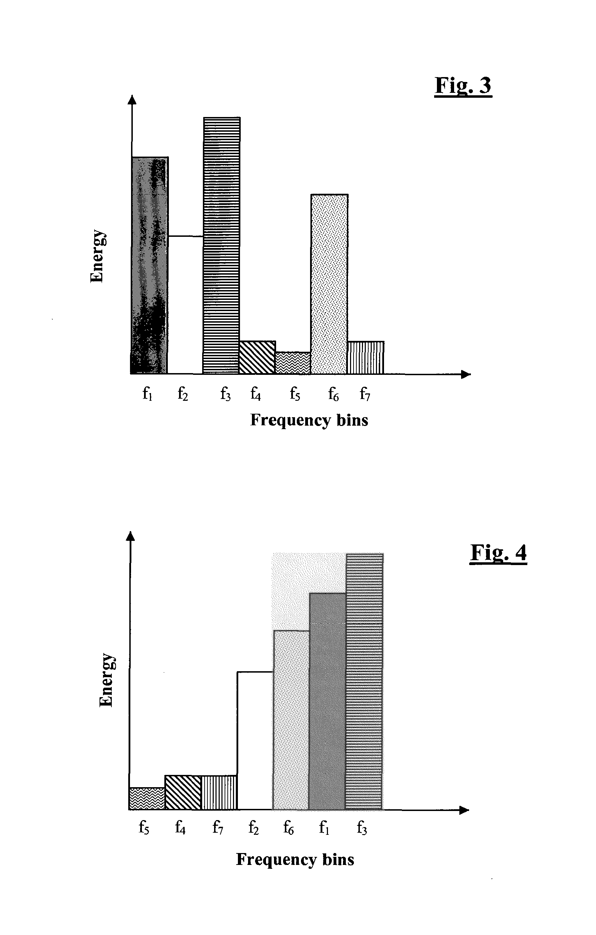

The energy values for the different frequency components can be represented as in Figure 3, where the full frequency band is divided into the frequency sub-bands f₁ to f₇ which are therefore in order of frequency. In a real system there would generally be a much larger number of frequency components. At step 116, the processor is arranged to re-order the energy values of the frequency sub-bands in order of energy, as shown in Figure 4. This can be in order of increasing or decreasing energy. For example this may be done by assigning an index number to each energy value, with the lowest index number being assigned to the lowest (or highest) energy value and the highest index number to the highest (or lowest) energy value.

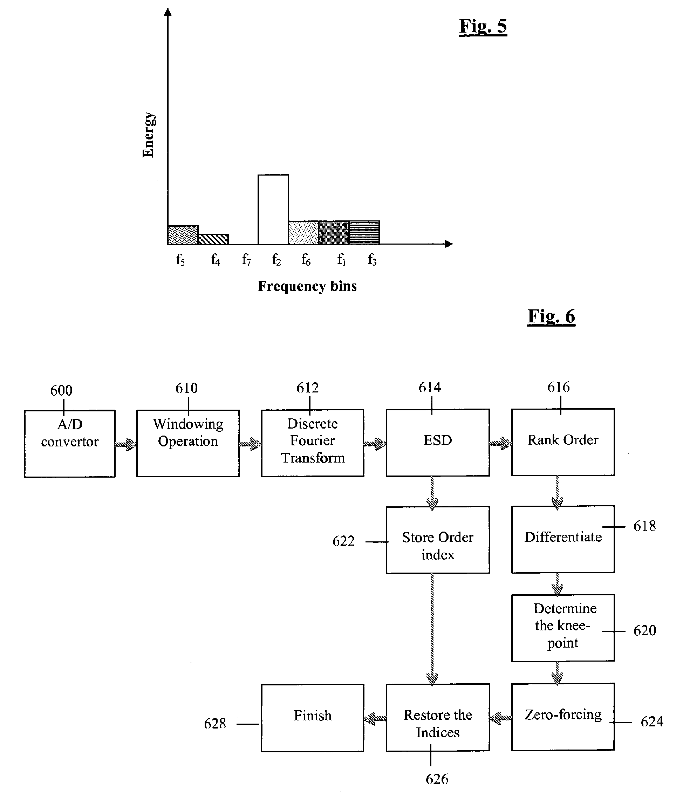

At step 118 the processor is arranged to perform a differentiation step on the re-ordered energy values as shown in Figure 5. The step is arranged to provide a measure of the rate of change of energy level as a function of frequency. In this embodiment this is achieved by subtracting the energy magnitude of one frequency sub-band, or frequency bin, from the energy magnitude of an adjacent one. If the OFDM-based primary system is absent, this would result in negligible difference between sub-bands as the signal would comprise exclusively noise, which is typically in the form of Additive White Gaussian Noise (AWGN) which has a Gaussian frequency distribution and therefore results in approximately constant ESD over one frequency band. On the other hand when the primary system is active, i.e. a source is transmitting data using the OFDM system, the rate at which the measured ESD changes with frequency, and in particular between frequency sub-bands, is noticeable. This is due to frequency diversity introduced by the channel.

In this embodiment the processor 12 is arranged to calculate the difference in energy between each adjacent pair of sub-bands in the re-ordered sequence. Referring to Figure 4, this involves calculating the difference between the energies for sub-bands f₅ and f₄, f₄ and f₇, f₇ and f₂ etc. Each of these differences is considered as a differentiated value of the ESD, with respect to frequency, and the result of the calculation is a set of differentiated values for the time window being analysed. The processor is then arranged to identify at step 120 the maximum value of the differentiated value (in this case the maximum difference between adjacent values) and at step 122 the minimum value of the differentiated value (in this case the minimum difference between adjacent values). The processor is then arranged, at step 124 to find the ratio of the two extreme values (i.e. maximum/minimum ratio) of the differentiated ESD. This is done by dividing the maximum value by the minimum value. This value of the max/min ratio is then used as a test value and checked against a predetermined threshold value λ₁ at step 126. The result of this comparison is to allocate the time window to one of two categories. If the max/min ratio is greater than λ₁ then the signal for the relevant time window is categorized as frequency selective. If the max/min ratio is less that λ₁ ten the signal for the relevant time window is categorized as flat. If the signal is categorized as frequency selective then the max/min ratio is compared with a further threshold λ₃ at step 128. If it exceeds that threshold then the OFDM signal is determined as being present. If it does not exceed the threshold then the OFDM signal is determined as being absent.

If at step a126 the signal for the time window is categorized as flat, then the maximum value of the differentiated ESD, which in this case is generated at step 130 by multiplying the max/min ratio by the minimum value of the differentiated ESD, is compared with a further threshold value λ₂ at step 132. If it exceeds the threshold then the OFDM signal is determined as being present. If it does not exceed the threshold then the OFDM signal is determined as being absent.

The decision making process described above is particularly suitable to low SNR situations, but in high SNR situations it may be more complex than is required. Therefore in a modification to this embodiment, after the energy values of the sub-bands are ordered by magnitude at step the SNR of the signal is calculated and compared to a threshold value λ₄ at step 140. If the SNR is below this threshold value, then the process returns to the differentiation step 142. However if the SNR is above the threshold value, then the ratio of the maximum energy to the minimum energy in the set of ordered values is calculated at step 144, and compared to a further threshold λ₅ at step 146. If it exceeds the threshold then the OFDM signal is determined as being present. If it does not exceed the threshold then the OFDM signal is determined as being absent.

At the end of the decision making process described, if the frequency band is determined to be occupied by an OFDM signal, then the system can proceed as appropriate, for example by processing the received signal to extract data from it. If the OFDM signal is determined to be absent, and the frequency band therefore vacant, then again the system can respond accordingly, for example treating the band as available for secondary use.

The thresholds described above can be obtained using the Neyman-Pearson test as described in Y. Zeng and Y.C. Liang, "Eigenvalue-based spectrum sensing algorithms for cognitive radio," IEEE Transactions on Communications, vol. 57, no. 6, pp. 1784 - 1793, Jun. 2009.

It will be appreciated that various modifications can be made to the system and method described above. In particular, whereas the detection of only one type of PFDM signal is described above, the system can be arranged to search for, and detect, a number of different signals. It is known that different communications protocols and service providers use different frequency bands, different sub-band widths, and also use different symbol lengths. It is desirable for the time window to have a fixed relationship to the symbol length, in particular to be a multiple of the symbol length. Therefore referring back to Figure 2, if the system is arranged to search in each of a number of frequency bands using the outputs of a number of the band pass filters 100, then the mobile device may have stored in memory a look-up table which identifies for each frequency band a relevant time window and a relevant sub-band width which can be used for searching for signals in that frequency band. The device can then check for a number of different types of communication either in data from subsequent time windows or in data from the same time window of the processing is sufficiently fast. This enables the system to operate as a cognitive radio system which can detect communications from a number of different sources using a number of different protocols and respond accordingly.

In other embodiments the comparison between energy content of the different frequency sub-bands, i.e. the differentiation step described, can be carried out in a number of different ways. For example the ordering step can be omitted and the difference between the energies of sub-bands which are adjacent in the frequency domain can be calculated and used to test for the presence or absence of a communication signal. Alternatively other pairs or groups of sub-bands can be selected to have their energy levels compared and these comparisons may be selected as being effective in specific situations. Indeed any other measure of the variation in energy between the sub-bands can be calculated and used to test for the presence or absence of a signal.

In a further embodiment similar to that of Figure 2, the processor 12 is arranged to carry out the steps shown in Figure 6. First the signal is converted to a digital signal at the A/D converter 600. The signal is then divided into time windows at step 610 in an equivalent way to step 110 in Figure 2. At step 612 the processor is then arranged to calculate the Discrete Fourier Transform (DFT) to separate the signal into a series of frequency components, each one representing the content of the signal within a respective frequency sub-band. This step is equivalent to step 112 of Figure 2. At step 614 (equivalent to 114 of Figure 2) an energy value for each frequency sub-band is found by determining the energy spectral density (ESD), calculated by squaring the absolute valve of the DFT for each frequency component. At step 622 the processor stores the energy level values and the order of the energy values by associating an order index with each energy value so that the energy values can be reordered in order of frequency once the decision making process is complete. The energy values calculated in step 614 are reordered in step 616 (equivalent to step 116 in figure 2) in order of energy. For example this may be done by assigning an energy index number to each energy value, with the lowest energy index number being assigned to the lowest (or highest) energy value and the highest energy index number to the highest (or lowest) energy value. At the following step 618 (equivalent to step 118 in Figure 2) the processor is arranged to perform a differentiation step on the reordered energy values. The step is arranged to provide a measure of the rate of change of energy as a function of frequency. In this embodiment this is achieved by subtracting the energy magnitude of one frequency sub-band, or frequency bin, from the energy magnitude of an adjacent one. At step 620 the knee point is found which indicates where a large change in energy occurs between consecutive sub-bands. This corresponds to the largest value of the derivative of the energy with respect to frequency. The identification of the energy at which the knee point occurs provides means to determine whether or not the energy bands contain an OFDM signal. Those sub-bands with energy greater than the energy at which the knee point occurs are considered to contain an OFDM signal. Those sub-bands with energy below the energy at which the knee point occurs are considered to be noise carrying or empty sub-bands containing no OFDM signal. In step 624 the sub-bands determined to carry only noise are deemed empty and their stored energy level values are set to zero. These empty sub-bands can then be reused. For example, they can provide empty sub-bands in which to transmit additional signals. At the following step 626 the sub-bands are re-ordered back into order of frequency. This is achieved using the order indices store at step 622. With the sub-bands returned to frequency order, the empty sub-bands zeroed and the signal containing sub-bands identified the process is finished at step 628.

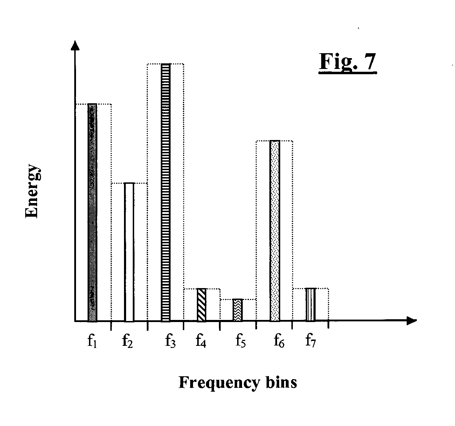

In a further embodiment similar to that of Figures 2 and 6 energy leakage between sub-bands can be overcome by only considering the middle 10-40 % (depending on the level of distortion) of the sub-carriers comprising each sub-band. As shown in Figure 7 the energy value for each sub-band is taken from the central part, for example the central 10-40 % of the sub-carriers (the shaded regions) of the total sub-band width (outlined by the broken lines). The parts of the frequency spectrum that are measured therefore spaced apart, and each has on either side of it, a boundary region in which any leakage from the adjacent sub-band will not affect the measured energy level. These energy values are then used in the ordering steps 116 and 616 previously described. The energy leakage has a larger effect on the sub-carriers situated at the edges of the sub-band while the central sub-carriers are less affected. The vacancy of the sub-bands can therefore be more accurately determined from the energy of the central portion sub-carriers rather than all of the sub-carriers.

It will be appreciated that the systems described above can have a number of advantages. For example they can provide a signal processing apparatus which is able to sense OFDM sources, or other frequency division multiplexed signals such as CDMA signals, in very complex signal propagation environments. The systems are also suitable for sub-band level spectrum sensing employed in multi-carrier systems as well as OFDM systems. The systems can take advantage of the frequency selectivity of channels, and also work well in flat fading environments. They can outperform the state of the art for the very low signal-to-noise power density ratio (SNR), and achieve the state-of-the-art performance for the high and moderate SNR ratios as well. They can be robust to various harmful physical impairments inherent in wireless and wired systems such as frequency and timing offsets, Doppler shifts, and oscillator mismatch. Also they are suitable for both wideband and narrow band systems. They can be employed in self organising networks with no predetermined and fixed frequency planning. They can be used in conjunction with a central database where the final decision is made by the terminal. They can be used in order to aid the decision made by the network, for example the mobile device or other terminal can send the frequency detection information to a node in the network thereby allowing the network to decide about the frequency use or re-use strategy. Multiple frequency reuses can be made within the same cell/sector (i.e. smallest unit of coverage in a network).

The systems described above can have a detection probability of 95 % and false-detection probability of 5 % when the observing time is equal to only two multi-carrier symbols in an environment having a signal to noise ratio of -20 dB.

The state-of-the-art spectrum sensing schemes cannot offer reliability for the situation of very low signal-to-noise ratio (e.g. SNR<-10 dB), which is often the case in practical systems. Some embodiments of the invention can show high reliability for the SNR down to -25 dB. Moreover they can be fast and robust to various physical impairments.

## Claims

1. A source detection system for detecting presence of wireless communication signals, the system comprising: receiving means for receiving a signal; and processing means arranged to filter the signal to separate it into a plurality of frequency components, and determine an energy content for each of the frequency components, **characterized in that** the processing means is further arranged to select a pair of the frequency components as adjacent to each other in order of energy content, calculate a measure of the difference between the energy contents of said pair of frequency components, and make a determination, from said measure, whether the signal has been transmitted from a source.

2. A system according to claim 2 wherein the processing means is arranged to identify a plurality of pairs of frequency components and for each pair to calculate the difference between the energy contents of the two frequency components in the pair, thereby to produce a set of energy differences.

3. A system according to any foregoing claim wherein the processing means is arranged to order the frequency components in order of energy content so as to identify the, or each, pair.

4. A system according to any foregoing claim wherein the processing means is arranged to identify a maximum energy difference and a minimum energy difference, to calculate the ratio between the maximum and minimum energy differences, and to make the determination on the basis of the ratio.

5. A system according to claim 4 wherein the processing means is arranged to allocate the signal to a category of flat signals or frequency selective signals on the basis of the maximum/minimum ratio, and to select one of at least two further processing methods depending on whether or not the maximum/minimum ratio is greater than the reference value.

6. A system according to claim 5 wherein the processing means is arranged, for signals in the flat category, to compare the maximum energy difference with a threshold value to make the determination.

7. A system according to claim 5 or claim 6 wherein the processing means is arranged, for signals in the frequency selective category, to compare the maximum/minimum ratio with a threshold value to make the determination.

8. A system according to any foregoing claim wherein the processing means is arranged to measure a signal to noise ratio for at least a component of the signal, to compare the signal to noise ratio with a reference value, and to select one of at least two further processing methods depending on whether or not the measured signal to noise ratio is greater than the reference value.

9. A system according to any foregoing claim wherein the processing means is arranged to split the received signal into a sequence of time windows, and to identify said frequency components for each time window.

10. A system according to claim 9 wherein the processing means is arranged to identify a series of symbols in the received signal, and the length of the time windows is arranged to have a fixed relationship to the length of the symbols.

11. A system according to claim 10 wherein the processing means is arranged to receive signals coding data according to a plurality of different protocols, the different protocols having symbols of different lengths, and to select the length of the time windows depending on the type of signal to be detected.

12. A system according to any preceding claim, wherein the processing means is arranged to determine the energy content of only a central part of each frequency component.

13. A system according to any foregoing claim wherein the processing means is arranged to determine an order index to identify each energy content in order of frequency.

14. The system according to any foregoing claim, wherein the processing means is arranged to set the energy component of a signal not determined to be transmitted from a source to zero so that the frequency component can be reused.

15. A method of source detection for detecting presence of wireless communication signals, the method comprising: receiving a signal; filtering the signal to separate it into a plurality of frequency components; determining an energy content for each of the frequency components; **characterized by** selecting a pair of the frequency components as adjacent to each other in order of energy content; calculating a measure of the difference between the energy contents of said pair of frequency components; and making a determination, from said measure, whether the signal has been transmitted from a source.

## Patentansprüche

1. Ein Quellenerkennungssystem zum Erkennen der Präsenz von drahtlosen Kommunikationssignalen, das System bestehend aus: einer Empfangsvorrichtung zum Empfang eines Signals; und einer Verarbeitungsvorrichtung, die so angeordnet ist, dass sie das Signal filtert, um es in eine Vielzahl von Frequenzkomponenten zu unterteilen, und einen Energiegehalt für jede der Frequenzkomponenten festlegt, dadurch charakterisiert, dass die Verarbeitungsvorrichtung darüberhinaus so angeordnet ist, dass sie nach ihrem Energiegehalt ein Paar der Frequenzkomponenten auswählt, die nebeneinander liegen, ein Maß der Differenz zwischen dem Energiegehalt des besagten Paares der Frequenzkomponenten berechnet und über besagtes Maß bestimmt, ob das Signal von einer Quelle übertragen wurde.

2. Ein System gemäß Anspruch 2, wobei die Verarbeitungsvorrichtung so angeordnet ist, dass sie die Vielzahl der Paare der Frequenzkomponenten identifiziert, und für jedes Paar die Differenz zwischen dem Energiegehalt der beiden Frequenzkomponenten im Paar berechnet, um dadurch einen Satz von Energiedifferenzen zu erzeugen.

3. Ein System gemäß eines der vorhergehenden Ansprüche, wobei die Verarbeitungsvorrichtung so angeordnet ist, dass sie die Frequenzkomponenten nach ihrem Energiegehalt ordnet, um das oder das jeweilige Paar zu identifizieren.

4. Ein System gemäß eines der vorhergehenden Ansprüche, wobei die Verarbeitungsvorrichtung so angeordnet ist, dass sie eine maximale Energiedifferenz und eine minimale Energiedifferenz identifiziert, das Verhältnis zwischen den maximalen und minimalen Energiedifferenzen berechnet und die Bestimmung auf der Grundlage dieses Verhältnisses durchführt.

5. Ein System gemäß Anspruch 4, wobei die Verarbeitungsvorrichtung so angeordnet ist, dass sie das Signal einer Kategorie von flachen Signalen oder frequenzselektiven Signalen auf der Grundlage des maximalen/minimalen Verhältnisses zuteilt, und eines von mindestens zwei weiteren Verarbeitungsverfahren auswählt, abhängig davon, ob das maximale/minimale Verhältnis größer als der Referenzwert ist oder nicht.

6. Ein System gemäß Anspruch 5, wobei die Verarbeitungsvorrichtung so angeordnet ist, dass sie, für Signale in der flachen Kategorie, die maximale Energiedifferenz mit einem Schwellenwert zur Durchführung der Bestimmung vergleicht.

7. Ein System gemäß Anspruch 5 oder Anspruch 6, wobei die Verarbeitungsvorrichtung so angeordnet ist, dass sie, für Signale in der frequenzselektiven Kategorie, das maximale/minimale Verhältnis mit einem Schwellenwert für die Durchführung der Bestimmung vergleicht.

8. Ein System gemäß eines der vorhergehenden Ansprüche, wobei die Verarbeitungsvorrichtung so angeordnet ist, dass sie ein Signal-Rausch-Verhältnis für mindestens eine Komponente des Signals misst, das Signal-Rausch-Verhältnis mit einem Referenzwert vergleicht und eines von mindestens zwei weiteren Verarbeitungsverfahren auswählt, abhängig davon, ob das gemessene Signal-Rausch-Verhältnis größer als der Referenzwert ist oder nicht.

9. Ein System gemäß eines der vorhergehenden Ansprüche, wobei die Verarbeitungsvorrichtung so angeordnet ist, dass sie das empfangene Signal in eine Sequenz von Zeitfenstern gliedert, und die besagten Frequenzkomponenten für jedes Zeitfenster identifiziert.

10. Ein System gemäß Anspruch 9, wobei die Verarbeitungsvorrichtung so angeordnet ist, dass sie eine Reihe von Symbolen im empfangenen Signal identifiziert, und die Länge des Zeitfensters so angeordnet ist, dass sie eine feste Beziehung zur Länge der Symbole hat.

11. Ein System gemäß Anspruch 10, wobei die Verarbeitungsvorrichtung so angeordnet ist, dass sie Signalkodierungs-Daten, gemäß einer Vielzahl verschiedener Protokolle, empfängt, die verschiedenen Protokolle haben dabei Symbole mit verschiedenen Längen, und dass sie die Länge des Zeitfensters, abhängig vom Typ des zu erkennenden Signals, auswählt.

12. Ein System gemäß eines der vorhergehenden Ansprüche, wobei die Verarbeitungsvorrichtung so angeordnet ist, dass sie den Energiegehalt von nur einem zentralen Teil jeder Frequenzkomponente bestimmt.

13. Ein System gemäß eines der vorhergehenden Ansprüche, wobei die Verarbeitungsvorrichtung so angeordnet ist, dass sie einen Befehlsindex festlegt, um jeden Energiegehalt nach der Frequenz zu identifizieren.

14. Das System gemäß eines der vorhergehenden Ansprüche, wobei die Verarbeitungsvorrichtung so angeordnet ist, dass sie die Energiekomponente eines Signals, das nicht von einer Quelle übertragen werden soll, auf null stellt, so dass die Frequenzkomponente wiederverwendet werden kann.

15. Ein Quellenerkennungsverfahren zum Erkennen der Präsenz von drahtlosen Kommunikationssignalen, das Verfahren bestehend aus: einer Empfangsvorrichtung zum Empfang eines Signals; der Filterung des Signals, um es in eine Vielzahl von Frequenzkomponenten zu unterteilen, der Bestimmung eines Energiegehalts für jede der Frequenzkomponenten, charakterisiert durch die Auswahl eines Paares der Frequenzkomponenten, die nebeneinander liegen, nach ihrem Energiegehalt, Berechnung eines Maßes der Differenz zwischen dem Energiegehalt des besagte Paares der Frequenzkomponenten und Bestimmung, von besagtem Maß aus, ob das Signal von einer Quelle übertragen wurde.

## Revendications

1. Un système de détection de source destiné à la détection d'une présence de signaux de communication sans fil, le système comprenant : un moyen de réception destiné à la réception d'un signal et un moyen de traitement agencé de façon à filtrer le signal de façon à le séparer en une pluralité de composantes de fréquence et à déterminer un contenu énergétique pour chacune des composantes de fréquence, **caractérisé en ce que** le moyen de traitement est agencé en outre de façon à sélectionner une paire des composantes de fréquence comme étant adjacentes l'une à l'autre en ordre de contenu énergétique, à calculer une mesure de la différence entre les contenus énergétiques de ladite paire de composantes de fréquence et à déterminer, à partir de ladite mesure, si le signal a été transmis à partir d'une source.

2. Un système selon la Revendication 2 où le moyen de traitement est agencé de façon à identifier une pluralité de paires de composantes de fréquence et, pour chaque paire, de façon à calculer la différence entre les contenus énergétiques des deux composantes de fréquence dans la paire, afin de produire ainsi un ensemble de différences d'énergie.

3. Un système selon l'une quelconque des Revendications précédentes où le moyen de traitement est agencé de façon à ordonner les composantes de fréquence selon un ordre de contenu énergétique de façon à identifier la, ou chaque, paire.

4. Un système selon l'une quelconque des Revendications précédentes où le moyen de traitement est agencé de façon à identifier une différence d'énergie maximale et une différence d'énergie minimale de façon à calculer le rapport entre les différences d'énergie maximale et minimale et à effectuer la détermination en fonction du rapport.

5. Un système selon la Revendication 4 où le moyen de traitement est agencé de façon à attribuer le signal à une catégorie de signaux plats ou de signaux sélectifs en fréquence en fonction du rapport maximal/minimal et à sélectionner un procédé parmi au moins deux autres procédés de traitement selon que le rapport maximal/minimal est ou non supérieur à la valeur de référence.

6. Un système selon la Revendication 5 où le moyen de traitement est agencé, pour des signaux dans la catégorie signaux plats, de façon à comparer la différence d'énergie maximale à une valeur seuil de façon à effectuer la détermination.

7. Un système selon la Revendication 5 ou 6 où le moyen de traitement est agencé, pour des signaux dans la catégorie signaux sélectifs en fréquence, de façon à comparer le rapport maximal/minimal à une valeur seuil de façon à effectuer la détermination.

8. Un système selon l'une quelconque des Revendications précédentes où le moyen de traitement est agencé de façon à mesurer un rapport signal sur bruit pour au moins une composante du signal, à comparer le rapport signal sur bruit à une valeur de référence et à sélectionner un procédé parmi au moins deux autres procédés de traitement selon que le rapport signal sur bruit mesuré est supérieur ou non à la valeur de référence.

9. Un système selon l'une quelconque des Revendications précédentes où le moyen de traitement est agencé de façon à diviser le signal reçu en une séquence de fenêtres temporelles et à identifier lesdites composantes de fréquence pour chaque fenêtre temporelle.

10. Un système selon la Revendication 9 où le moyen de traitement est agencé de façon à identifier une série de symboles dans le signal reçu et la longueur des fenêtres temporelles est agencée de façon à présenter une relation fixe par rapport à la longueur des symboles.

11. Un système selon la Revendication 10 où le moyen de traitement est agencé de façon à recevoir des signaux codant des données selon une pluralité de protocoles différents, les protocoles différents possédant des symboles de différentes longueurs et à sélectionner la longueur des fenêtres temporelles en fonction du type de signal à détecter.

12. Un système selon l'une quelconque des Revendications précédentes, où le moyen de traitement est agencé de façon à déterminer le contenu énergétique d'une partie centrale seulement de chaque composante de fréquence.

13. Un système selon l'une quelconque des Revendications précédentes où le moyen de traitement est agencé de façon à déterminer un indice d'ordre destiné à identifier chaque contenu énergétique par ordre de fréquence.

14. Le système selon l'une quelconque des Revendications précédentes, où le moyen de traitement est agencé de façon à définir la composante énergétique d'un signal non déterminé à être transmis à partir d'une source sur zéro de sorte que la composante de fréquence puisse être réutilisée.

15. Un procédé de détection de source destiné à la détection d'une présence de signaux de communications sans fil, le procédé comprenant : la réception d'un signal, le filtrage du signal de façon à le séparer en une pluralité de composantes de fréquence, la détermination d'un contenu énergétique pour chacune des composantes de fréquence, **caractérisé par** la sélection d'une paire des composantes de fréquence comme étant adjacentes l'une à l'autre en ordre de contenu énergétique, le calcul d'une mesure de la différence entre les contenus énergétiques de ladite paire de composantes de fréquence et la détermination, à partir de ladite mesure, si le signal a été transmis à partir d'une source.
